# EUROPEAN PATENT SPECIFICATION

(11) **EP 4 256 921 B1**
(45) Date of publication and mention of the grant of the patent: **12.08.2026**
(21) Application number: 21900324.1
(22) Date of filing: 27.10.2021
(51) Int. Cl.: A01B 69/04, A01D 41/127, G05D 1/00

(54) **COMBINE AND METHOD FOR CALCULATING UNWORKED LAND**
MÄHDRESCHER UND VERFAHREN ZUR BERECHNUNG VON UNBEARBEITETEM LAND
MOISSONNEUSE-BATTEUSE ET PROCÉDÉ DE CALCUL DE TERRAIN NON TRAVAILLÉ

(30) Priority: 02.12.2020 JP 2020200122
(43) Date of publication of application: 11.10.2023
(73) Proprietor: Yanmar Holdings Co., Ltd., Osaka-shi, Osaka 530-8311 (JP)
(72) Inventor: NISHII, Yasuto, Osaka-shi, Osaka 530-8311 (JP); YAMAGUCHI, Yuji, Osaka-shi, Osaka 530-8311 (JP); SUZUKI, Hidetaka, Osaka-shi, Osaka 530-8311 (JP); MURAYAMA, Masaaki, Okayama-Shi, Okayama 702-8515 (JP)
(74) Representative: Novagraaf International SA
(86) International application number: PCT/JP2021/039599
(87) International publication number: WO 2022/118569

(56) References cited:
- WO-A1-2019/124217
- WO-A1-2020/026578
- WO-A1-2020/100810
- JP-A- 2013 096 291
- JP-A- 2019 106 927
- JP-A- 2019 106 927
- JP-A- 2020 022 429
- JP-A- 2020 087 340
- JP-B2- 6 708 724
- JP-B2- 6 749 448
- US-A1- 2018 364 726
- US-B2- 9 526 199

## Description

### TECHNICAL FIELD

This invention relates to a combine that generates an unworked site and an unworked site calculation method.

### BACKGROUND ART

There is known a contour shape calculation system for calculating the contour shape of an unworked site area that is located inside the worked site that is formed by circumference reaping (round reaping) the field (Patent Literature 1). This system calculates the contour shape of the work target area by setting a reference point (center-of-gravity point) inside the shape formed by connecting at least one of a plurality of first measurement positions and a plurality of second measurement positions at a time after one lap of round reaping around the field completes, and connecting with a line the measurement positions closer to the reference point. Document JP2019106927A relates to an area determination system that calculates a work target area in a field. Document WO2020100810A1 relates to a harvester that is equipped with a harvest tank that temporarily stores harvests and that is capable of traveling automatically, and a route setting system that sets a target route of this harvester. Document WO2019124217A1 relates to a work vehicle, a travel route selection system for a work vehicle, and a travel route calculation system. Document US9526199B2 relates to a work vehicle coordinating system for carrying out a ground work (ground-preparing work) in a central work land and a headland extending around the central work land by a unmanned steerable sub work vehicle and a man-steered main work vehicle in cooperation with each other. Document WO2020026578A1 relates to a technique for managing and controlling the operation of a combine for harvesting crops in a field.

### CITATION LIST

### Patent Literature

Patent Literature 1: JP 2020-22375 A

### DISCLOSURE OF INVENTION

### PROBLEMS TO BE SOLVED BY THE INVENTION

In the system described above, however, when calculating the contour shape of a work target area, it is necessary to set a reference point after one lap of round reaping around the field, select measurement positions based on the reference point, and connect the measurement positions with a line. In other words, the contour shape of the work target area cannot be calculated without identifying many points (positions) and performing many steps.

The present invention provides a combine and an unworked site calculation method which allow for easily generating an unworked site.

### MEANS FOR SOLVING THE PROBLEMS

The present invention is a combine that generates an unworked site of a field by round reaping in which a vehicle body performs a reaping work while repeating straight advance and turn, the combine comprising a positioning unit that acquires a measurement point indicating a position of the vehicle body, a straight line generation unit that generates a work straight line based on the measurement point acquired between a work start position and a work end position through one round of the reaping work, and an unworked site generation unit that calculates an intersection point of the work straight lines crossing one another each time the work straight line is generated, and generates the unworked site that forms a polygon with at least three of the intersection points as vertices, when at least three of the work straight lines cross to constitute a closed area.

In this case, the unworked site generation unit may set the unworked site by setting the intersection point that is calculated last as a start point, generating a first polygon if at least three of the intersection points including the start point are found as a result of searching for the intersection points clockwise from the start point, generating a second polygon if at least three of the intersection points including the start point are found as a result of searching for the intersection points counterclockwise from the start point, and if only one of the first polygon and the second polygon is generated, setting the generated one of the first polygon and the second polygon as the unworked site, whereas if both the first polygon and the second polygon are generated, setting one with a larger area of the first polygon and the second polygon as the unworked site.

In this case, the positioning unit may continuously acquire the measurement points from the work start position to the work end position through one round of the reaping work, and the straight line generation unit may generate a reference straight line based on a plurality of the acquired measurement points, and set the work straight line to pass through the measurement point that is farthest from the unworked site across the reference straight line and to extend along the reference straight line.

In this case, when one round of the reaping work is interrupted and then resumed, the straight line generation unit may generate a first work straight line based on the measurement point acquired between the work start position and a work interruption position, and generate a second work straight line based on the measurement point acquired between the work interruption position and the work end position, and if an inclination angle of the second work straight line relative to the first work straight line is within a predetermined range, the straight line generation unit may generate a straight line that connects the work start position and the work end position as the work straight line, whereas if the inclination angle of the second work straight line relative to the first work straight line exceeds the predetermined range, the straight line generation unit may make different the reaping work between a section from the work start position to the work interruption position and a section from the work interruption position to the work end position, and set the first work straight line and the second work straight line as different work straight lines from each other.

In this case, the combine may further comprise a travel route creation unit that generates a straight advance route in the unworked site, and an automatic operation control unit that executes the reaping work automatically along the straight advance route, wherein the work straight line may be generated by executing the reaping work automatically along the straight advance route.

The present invention is an unworked site calculation method for generating an unworked site of a field by round reaping in which a vehicle body performs a reaping work while repeating straight advance and turn, comprising a straight line generation step of generating a work straight line based on a measurement point indicating a position of the vehicle body, which is acquired between a work start position and a work end position through one round of the reaping work, and an unworked site generation step of calculating an intersection point of the work straight lines crossing one another each time the work straight line is generated and generating the unworked site that forms a polygon with at least three of the intersection points as vertices, when at least three of the work straight lines cross to constitute a closed area.

In this case, the unworked site generation step may comprise setting the intersection point that is calculated last as a start point, generating a first polygon if at least three of the intersection points including the start point are found as a result of searching for the intersection points clockwise from the start point, generating a second polygon if at least three of the intersection points including the start point are found as a result of searching for the intersection points counterclockwise from the start point, and if only one of the first polygon and the second polygon is generated, setting the generated one of the first polygon and the second polygon as the unworked site, whereas if both the first polygon and the second polygon are generated, setting one with a larger area of the first polygon and the second polygon as the unworked site.

In this case, the straight line generation step may comprise generating a reference straight line based on a plurality of the measurement points that are continuously acquired from the work start position to the work end position through one round of the reaping work, and setting the work straight line to pass through the measurement point that is farthest from the unworked site across the reference straight line and to extend along the reference straight line.

In this case, the straight line generation step may comprise when one round of the reaping work is interrupted and then resumed, generating a first work straight line based on the measurement point acquired between the work start position and a work interruption position, and generating a second work straight line based on the measurement point acquired between the work interruption position and the work end position, and the straight line generation step may comprise if an inclination angle of the second work straight line relative to the first work straight line is within a predetermined range, generating a straight line that connects the work start position and the work end position as the work straight line, whereas if the inclination angle of the second work straight line relative to the first work straight line exceeds the predetermined range, making different the reaping work between a section from the work start position to the work interruption position and a section from the work interruption position to the work end position, and setting the first work straight line and the second work straight line as different work straight lines from each other.

In this case, the unworked site calculation method may further comprise a travel route creation step of generating a straight advance route in the unworked site, and an automatic operation control step of automatically executing the reaping work along the straight advance route, wherein the work straight line may be generated by automatically executing the reaping work along the straight advance route.

### EFFECT OF THE INVENTION

According to the present invention, unworked site can be easily generated.

### BRIEF DESCRIPTION OF DRAWINGS

Fig. 1 is a side view illustrating a combine according to one embodiment of the invention.
Fig. 2 is a block diagram illustrating a positioning unit and a base station of the combine according to the embodiment of the invention.
Fig. 3 is a block diagram illustrating the combine according to the embodiment of the invention.
Fig. 4 is a plan view illustrating a state in which a contour of a work target field for the combine according to the embodiment of the present invention has been generated.
Fig. 5 is a plan view illustrating a state in which a headland and an automatic travel allowable area have been set in the work target field for the combine according to the embodiment of the present invention.
Fig. 6 is a plan view illustrating a state in which one reaping work has been performed in the work target field for the combine according to the embodiment of the present invention.
Fig. 7 is a plan view illustrating a state in which two reaping works have been performed in the work target field for the combine according to the embodiment of the present invention.
Fig. 8 is a plan view illustrating a state in which a second lap of reaping work around the work target field for the combine according to the embodiment of the present invention has been started.
Fig. 9 is a flow chart illustrating an unworked site calculation method according to an embodiment of the present invention.
Fig. 10 is a plan view illustrating a state in which one reaping work has been performed in the work target field for the combine according a first modification of the embodiment of the present invention.
Fig. 11 is a plan view illustrating a state in which the reaping work is resumed after interruption by the combine according to a second modification of the embodiment of the present invention.

### DESCRIPTION OF EMBODIMENTS

Embodiments of the present invention will be described below with reference to the accompanying drawings. Although terms indicating direction and position are used herein, such terms are used for convenience of explanation and do not limit the technical scope of the invention.

### [Outline of Combine]

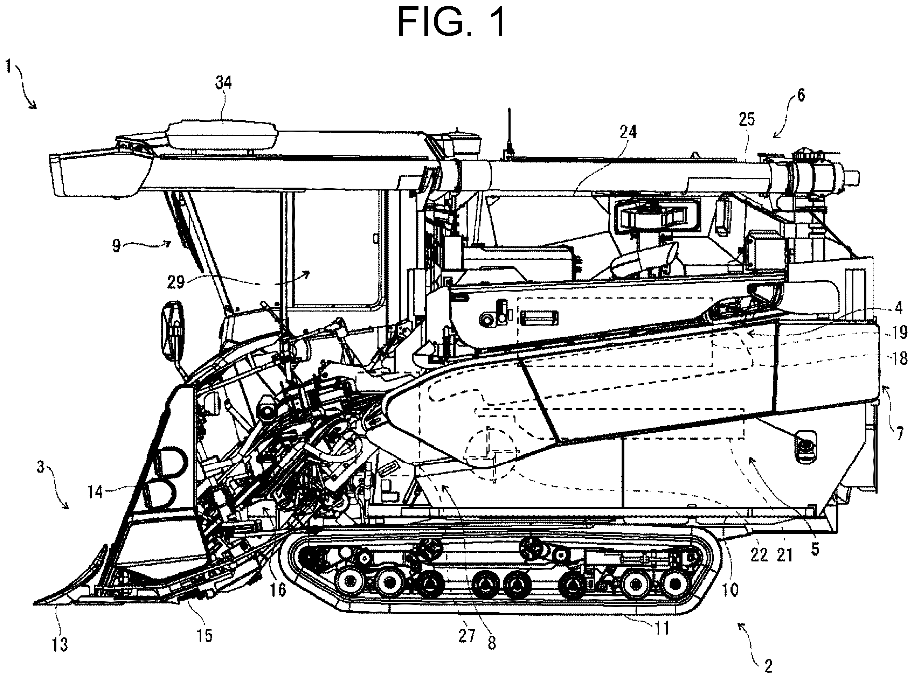

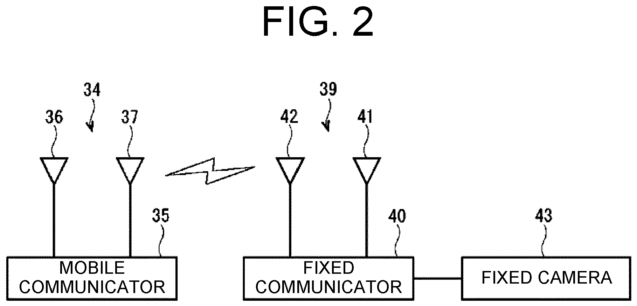

A combine 1 will be described with reference to Fig. 1 and Fig. 2. Fig. 1 is a side view illustrating the combine 1. Fig. 2 is a block diagram illustrating a positioning unit 34 and a base station 39.

The combine 1 performs work such as reaping grain culms in a field while traveling and turning automatically in a work target field, either by automatic operation or manual operation. The combine 1 is configured to perform an automatic operation in which steering is controlled by automated work while the traveling speed is controlled by manual operation, or an unmanned work in which steering and traveling speed are controlled by automatic operation.

As illustrated in Fig. 1, the combine 1 includes a traveling part 2, a reaping part 3, a threshing part 4, a sorting part 5, a reservoir part 6, a discharged straw processing part 7, a power part 8, and a steering part 9. The combine 1, which is a so-called head-feeding combine, threshes, by the threshing part 4, grain culms (reaping target) reaped by the reaping part 3, sorts the grains with the sorting part 5, and stores the grains in the reservoir part 6, while traveling by the traveling part 2. Furthermore, the combine 1 processes waste straw after the threshing, by the discharged straw processing part 7. The combine 1 drives the traveling part 2, the reaping part 3, the threshing part 4, the sorting part 5, the reservoir part 6, and the discharged straw processing part 7 with the power supplied from the power part 8.

The traveling part 2 includes a left-and-right pair of crawler type traveling devices 11 provided below the body frame 10. The crawler type traveling devices 11 are connected to an engine 27 via a transmission (not illustrated), and are rotated by output generated by the engine 27. The crawler type traveling device 11 is rotary driven, causing the combine 1 to travel forward and backward or turn to the left and right.

The reaping part 3 is provided in front of the traveling part 2. The reaping part 3 is provided so as to be capable of being raised and lowered between a lowered position, which enables reaping of the grain culms on a field, and a raised position, in which reaping of the grain culms is disabled. The reaping part 3 includes a divider 13, a raising device 14, a cutting device 15, and a conveying device 16. The divider 13 guides the grain culm on the field to the raising device 14. The raising device 14 raises the grain culms guided by the divider 13. The cutting device 15 cuts the grain culms raised by the raising device 14. The conveying device 16 conveys the grain culms cut by the cutting device 15 to the threshing part 4.

The threshing part 4 is provided behind the reaping part 3. The threshing part 4 includes a feed chain 18, and a threshing cylinder 19. The feed chain 18 conveys, for threshing, the grain culms conveyed from the conveying device 16 of the reaping part 3, and further conveys the grain culms after threshing, that is, discharged straw to the discharged straw processing part 7. The threshing cylinder 19 threshes the grain culms conveyed by the feed chain 18.

The sorting part 5 is provided below the threshing part 4. The sorting part 5 includes a swing sorting device 21, a wind sorting device 22, a grain conveying device (not illustrated), and a straw waste discharging device (not illustrated). The swing sorting device 21 sifts the threshed grain that falls from the threshing part 4 and sorts the threshed grains into grain, straw waste, etc. The wind sorting device 22 further sorts the threshed grains sorted by the swing sorting device 21 into grain, straw waste, etc., by air blow. The grain conveying device conveys the grains sorted by the swing sorting device 21 and the wind sorting device 22 to the reservoir part 6. The straw waste discharging device discharges the straw waste and the like sorted by the swing sorting device 21 and the wind sorting device 22 to the outside of the combine.

The reservoir part 6 is provided on the right side of the threshing part 4. The reservoir part 6 includes a grain tank 24 and a discharging device 25. The grain tank 24 stores the grains conveyed from the sorting part 5. The discharging device 25 is composed of an auger or the like, and discharges the grains stored in the grain tank 24 to a freely selected place.

The discharged straw processing part 7 is provided behind the threshing part 4. The discharged straw processing part 7 includes a discharged straw conveying device (not illustrated), and a discharged straw cutting device (not illustrated). The discharged straw conveying device conveys the discharged straw conveyed from the feed chain 18 of the threshing part 4 to the discharged straw cutting device. The waste straw cutting device cuts the waste straw conveyed by the waste straw conveying device, and discharges it to the outside of the machine.

The power part 8 is provided on the upper front side of the traveling part 2. The power part 8 includes the engine 27 that generates rotational power. The power part 8 transmits the rotational power generated by the engine 27 to the traveling part 2, the reaping part 3, the threshing part 4, the sorting part 5, the reservoir part 6, and the discharged straw processing part 7.

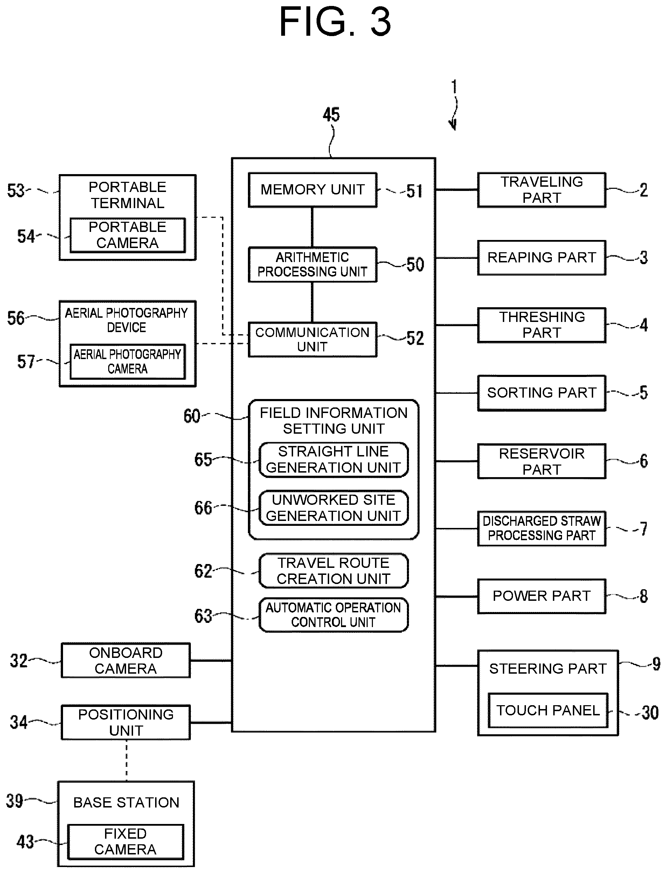

The steering part 9 is provided above the power part 8. The steering part 9 includes a driver's seat 29, a touch panel 30 (see Fig. 3), and a plurality of control tools (not illustrated). The driver's seat 29 is provided, for example, on the right side of the vehicle body, and includes a chair or the like for an operator to seat in. The touch panel 30 is provided at a position where the operator seated in the driver's seat 29 can operates it. The touch panel 30 is a display unit that displays images captured by various cameras, etc., described below, and is also an input unit for operating various devices by touching the displayed images. The plurality of control tools are operated by the operator seated in the driver's seat 29, and include a steering wheel for steering the combine 1, an accelerator for adjusting the rotation speed of the engine 27 (the traveling speed of the vehicle body), a raising and lowering switch that raises and lowers the reaping part 3, and the like.

The combine 1 includes an onboard camera 32 (see Fig. 3) and a positioning unit 34 (see Fig. 2). The onboard camera 32 photographs the field. The positioning unit 34 uses a satellite positioning system such as a Global Positioning System (GPS) to acquire measurement points 71 (position information) indicating the position of the vehicle body (combine 1).

### <Positioning Unit>

As illustrated in Fig. 1 and Fig. 2, the positioning unit 34 includes, for example, a mobile communicator 35, a mobile GPS antenna 36, and a data receiving antenna 37. The mobile communicator 35 and the like are unitized by storing stored in a case. The mobile communicator 35 communicates with a GPS satellite via the mobile GPS antenna 36 to acquire the position information of the vehicle body (or more precisely, the mobile GPS antenna 36). The mobile communicator 35 acquires measurement points 71 at predetermined time intervals from the satellite positioning system (GPS satellites). The mobile GPS antenna 36 is positioned, for example, at the front of the upper part of the steering part 9.

### <Base Station>

The base station 39 is installed on at a levee or the like around the work target field for the combine 1. The base station 39 includes a fixed communicator 40, a fixed GPS antenna 41, a data transmitting antenna 42, and a fixed camera 43. The fixed communicator 40 communicates with the GPS satellite via the fixed GPS antenna 41 to acquire the position information of the base station 39. The fixed communicator 40 transmits correction information based on the position information of the base station 39 to the mobile communicator 35 via the data transmitting antenna 42. The fixed camera 43 photographs the field. The fixed communicator 40 acquires the image (field image) captured by the fixed camera 43, and transmits the field image to the mobile communicator 35 via the data transmitting antenna 42. The mobile communicator 35 of the positioning unit 34 receives the correction information and the field image transmitted from the fixed communicator 40 of the base station 39 via the data receiving antenna 37. The mobile communicator 35 corrects the position information of the vehicle body (combine 1) based on the correction information. The base station 39 does not have to be installed, and correction of the position information by the base station 39 does not have to be performed.

### [Control Device]

Next, a control device 45 of the combine 1 will be described with reference to Fig. 3.

Fig. 3 is a block diagram illustrating the combine 1.

The control device 45 includes an arithmetic processing unit 50, a memory unit 51, and a communication unit 52. The arithmetic processing unit 50, the memory unit 51, and the communication unit 52 are electrically connected to each other. The various components of the combine 1 described above are electrically connected to the control device 45 via an interface. The control device 45 controls the various components of the combine 1 according to input operations made by the operator via the steering part 9.

The memory unit 51 is, for example, a ROM (Read Only Memory), a RAM (Random Access Memory), a hard disk drive, or a flash memory, etc., and stores programs and data for controlling the various components and various functions of the combine 1. The arithmetic processing unit 50 controls the various components and various functions of the combine 1 by executing arithmetic processing based on programs and data stored in the memory unit 51. Here, in place of a processor or the like that executes programs, the control device 45 may be achieved by a logic circuit (hardware) formed in an integrated circuit or the like.

The communication unit 52 wirelessly communicates with a portable terminal 53 held by the operator. The portable terminal 53 is, for example, a tablet terminal with a touch panel, a notebook personal computer, and used to remotely control the combine 1. The portable terminal 53 includes a portable camera 54 for photographing the field. Furthermore, the communication unit 52 performs wireless communication with an aerial photography device 56 such as a drone. The aerial photography device 56 includes an aerial photography camera 57 for photographing the field. When the operator inputs an operation instruction for the aerial photography device 56 to the touch panel 30 or the portable terminal 53, the aerial photography device 56 operates according to the operation instruction transmitted from the communication unit 52. Note that the aerial photography device 56 may perform wireless communication with the portable terminal 53, instead of or in addition to the communication unit 52.

When the operator inputs photographing instructions for the respective cameras 32, 43, 57 to the touch panel 30 or the portable terminal 53 (hereinafter referred to as "touch panel 30 or the like"), the control device 45 controls the respective cameras 32, 43, 57 to photograph the field. The control device 45 causes the touch panel 30 or the like to display the field images captured by the respective cameras 32, 43, 57. Furthermore, when the operator inputs a display instruction to display the field image captured by the portable camera 54 to the touch panel 30 or the like, the control device 45 controls the portable terminal 53 via the communication unit 52 to display the field image on the touch panel 30 or the like. Alternatively, the portable terminal 53 and aerial photography device 56 may be omitted, and field information may not be acquired by the portable terminal 53 or the aerial photography device 56.

The control device 45 acquires (and stores in the memory unit 51) the position information (measurement points 71) of the combine 1 from the mobile communicator 35 of the positioning unit 34. The control device 45 causes the touch panel 30 or the like to displays a field information setting screen which allows setting of field information including, for example, a field contour 70 (the shape of the outer edge of the field). Furthermore, the control device 45 causes the touch panel 30 or the like, to display a field map based on the field information and a travel route showing a traveling direction of the combine 1 on the field map.

### [Functions of Control Device]

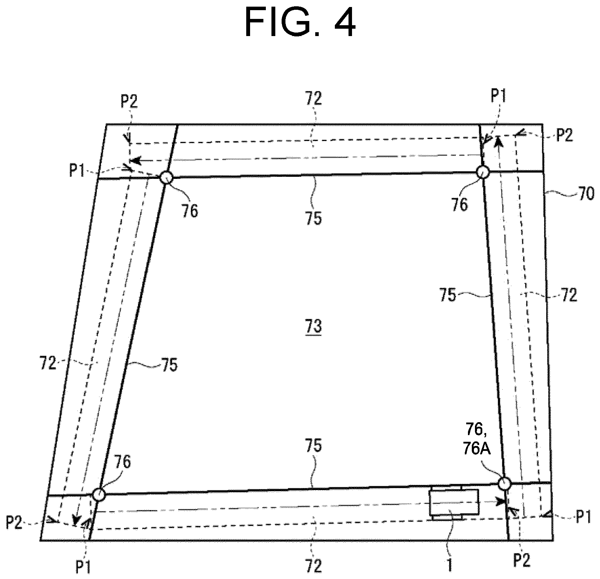

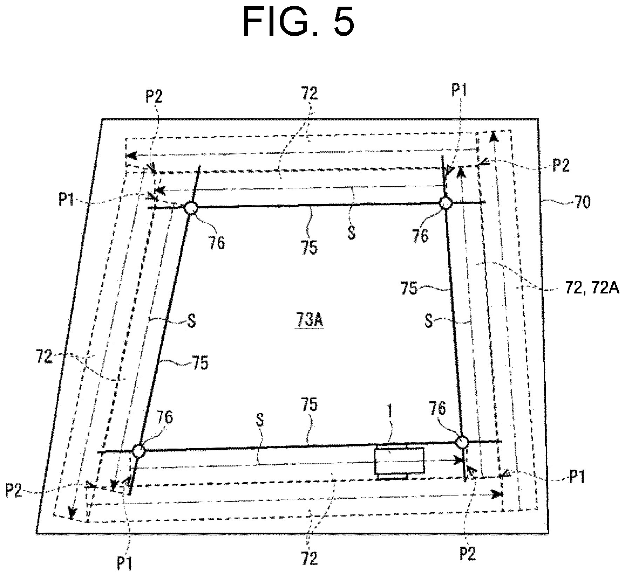

Next, the functions of the control device 45 will be described with reference to Fig. 3 to Fig. 5. Fig. 4 is a plan view illustrating a state in which the field contour 70 of the field has been generated. Fig. 5 is a plan view illustrating a state in which a headland 72A and an automatic travel allowable area 73A have been set in the field.

As illustrated in Fig. 3, the control device 45 includes a field information setting unit 60, a travel route creation unit 62, and an automatic operation control unit 63. The field information setting unit 60, the travel route creation unit 62, and the automatic operation control unit 63 are provided as functions of the control device 45, and are specifically realized by the arithmetic processing unit 50 performing arithmetic processing according to programs and data stored in the memory unit 51.

### <Field Information Setting Unit>

The field information setting unit 60 generates a field contour 70 and an unworked site 73 (an area where no reaping work is performed) by round reaping in which a vehicle body (combine 1) performs reaping works while repeating straight advance and turn. The four arrows in single dotted lines in Figs. 4, 5, etc., each indicate a traveling direction (rounding direction) of the combine 1, and one arrow indicates one reaping work (one straight advance step).

To generate the field contour 70, the operator manually travels the combine 1 along the outer edge of the field (not illustrated). By the combine 1 performing one lap of round reaping around the field while repeatedly alternating straight advance and turn (i.e., performing round reaping), the field information setting unit 60 generates a field contour 70 based on the position information (measurement points 71) acquired via the positioning unit 34.

After the field contour 70 is generated, the operator manually travels the combine 1 to generate the unworked site 73. In the example illustrated in Fig. 4, to form the field contour 70 in a generally rectangular shape, the combine 1 repeatedly alternates straight advance, and direction change (turn) at a corner of the field. On the site where the first lap of round reaping around the field (that is the second lap if the round reaping to generate the field contour 70 is included) is completed, a worked site 72 is formed in a generally rectangular loop pattern, and thereby an unworked site 73 is formed within the area surrounded by the worked site 72 (inside the worked site 72). The field information setting unit 60 stores (or causes to store) position information indicating the field contour 70 and the unworked site 73 in the memory unit 51.

As illustrated in Fig. 5, the worked site 72 is broadened by repeating the round reaping around the field in an inward spirally-winding fashion. When round reaping around the field is repeated a predetermined number of times, the worked site 72 serves as the headland 72A for turning around with (changing direction of) the combine 1 during automatic operation. In the example illustrated in Fig. 5, the worked site 72 that is formed when two laps of round reaping around the field (i.e., the third lap if the round reaping to generate the field contour 70 is included) are performed serves as the headland 72A. The unworked site 73 surrounded by the headland 72A serves as an automatic travel allowable area 73A in which the travel route creation unit 62 described later sets a travel route, etc. for automatic operation. The field information setting unit 60 stores position information indicating the headland 72A and the automatic travel allowable area 73A in the memory unit 51. The expressions "first lap" and "second lap" herein do not include round reaping to generate the field contour 70. Furthermore, the second or later lap of round reaping around the field is performed by manual traveling or automatic traveling.

The field information setting unit 60 may acquire field information about the field contour 70, etc., based on information manually inputted by the operator through the field information setting screen displayed on the touch panel 30 or the like In addition, the field information setting unit 60 may acquire at least one field image captured by the respective cameras 32, 43, 54, 57 and may automatically acquire field information by analyzing the at least one field image.

### <Travel Route Creation Unit>

To form the headland 72A (i.e., to perform the second lap of round reaping around the field), the travel route creation unit 62 generates (see Fig. 5) and stores in the memory unit 51 a straight advance route S that is referenced when the combine 1 performs an automatic straight advance (straight advance through the headland). Based on the field contour 70 and position information of the unworked site 73, the travel route creation unit 62 generates a straight advance route S so as to be along the periphery of the unworked site 73, inside the unworked site 73 that was formed after the first lap of round reaping around the field. When the combine 1 performs the reaping work while performing automatic straight advance, the travel route creation unit 62 forms a straight advance route S to adjoin the worked site 72 so that there is no crop left unreaped between the combine 1 and the worked site 72.

The travel route creation unit 62 generates a travel route (not illustrated), which is referenced when the combine 1 performs automatic operation (i.e., automatic traveling and automatic reaping) in the automatic travel allowable area 73A that is set inside the headland 72A, and stores the travel route in the memory unit 51. Preferably, the travel route creation unit 62 sets a route for reaping while traveling to be linear, and sets a travel route for the automatic travel allowable area 73A by combination of a plurality of linear routes. Preferably, the travel route creation unit 62 generates the travel route such that reaping proceeds from the periphery of the automatic travel allowable area 73A toward the center thereof. Preferably, the travel route creation unit 62 generates the travel route such that the automatic travel allowable area 73A is located on the left side of the vehicle body. When newly creating or modifying the travel route, the travel route creation unit 62 may select a travel route with high work efficiency from a plurality of tentatively generated travel routes. Here, the work efficiency is determined in consideration of not only the travel associated with reaping but also empty travel distance, turning, etc.

The travel route creation unit 62 may set the travel route on the basis of the field information that is manually input by the operator by using the touch panel 30 or the like, or may automatically set the travel route on the basis of the field information that is set by the field information setting unit 60. The travel route creation unit 62 sets the travel route of a predetermined travel pattern such as for forward-and-backward reaping travel or round reaping travel. The travel route includes an empty travel route through which the combine 1 moves from one linear route to another linear route, in addition to a linear route along which the grain plants are reaped. Thus, the travel route creation unit 62 preferably generates the travel route so as to make shorter the empty travel route (i.e., empty travel distance).

Note that the straight advance route S and the travel route are associated with travel setting concerning travel and work setting concerning work such as reaping. The travel setting includes, in addition to a travel position in the field, a travel speed and a travel direction (a steering direction, a forward direction, or a backward direction) at each travel position. The work setting includes information about whether during operation or stop of reaping at each travel position, reaping speed and reaping height, and any other work.

### <Automatic Operation Control Unit>

The automatic operation control unit 63 controls the power part 8, the traveling part 2, and the reaping part 3 on the basis of the travel setting and the work setting generated by the travel route creation unit 62, so as to execute automatic reaping work while automatically traveling along the straight advance routes S and the travel route (automatic operation). The automatic operation control unit 63 also controls the threshing part 4, the sorting part 5, the reservoir part 6, and the discharged straw processing part 7, so as to automatically thresh the reaped grain culms, sort the threshed grains from the straw waste, store the sorted grains, process the threshed waste straw, and the like. The combine 1 includes a gyroscopic sensor and an orientation sensor (a geomagnetic sensor) (none of them is illustrated). The automatic operation control unit 63 may acquire displacement information and orientation information from these sensors and may adjust automatic operation of the combine 1 on the basis of the position information, the displacement information, and the orientation information acquired by using the satellite positioning system.

### [Configuration of Field Information Setting Unit]

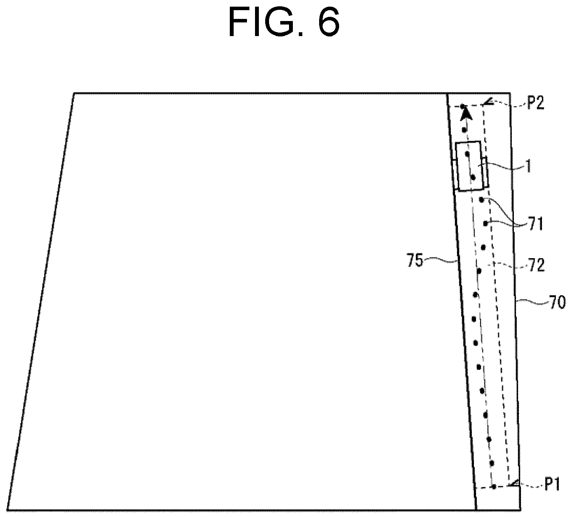

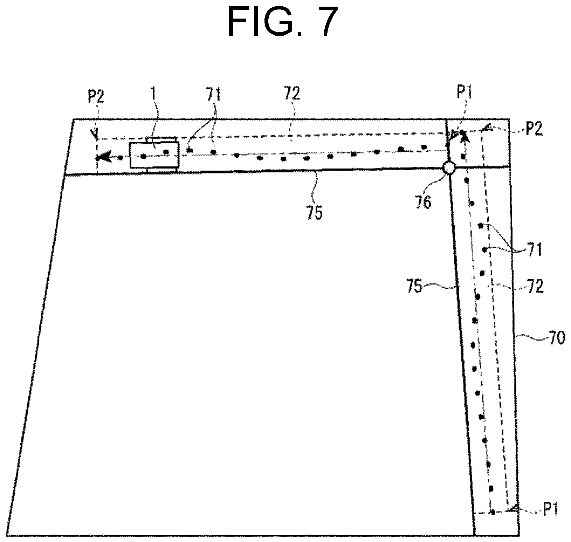

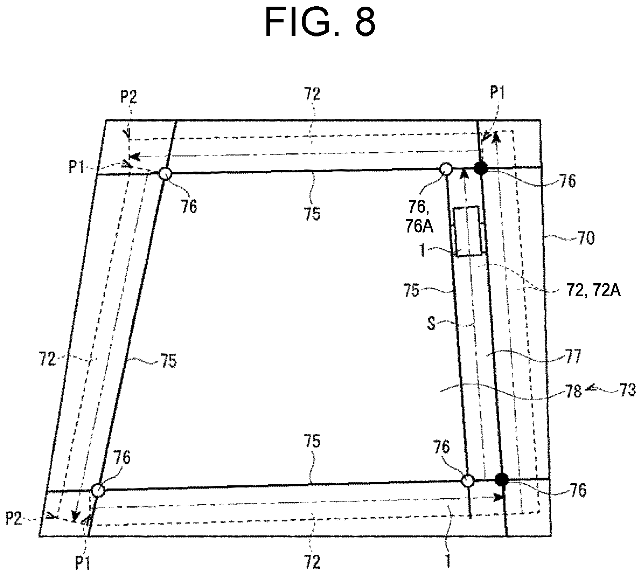

Next, a configuration of the field information setting unit 60 will be described with reference to Fig. 3 through Fig. 8. Fig. 6 is a plan view illustrating a state in which one reaping work has been performed in the field. Fig. 7 is a plan view illustrating a state in which two reaping works has been performed in the field. Fig. 8 is a plan view illustrating a state in which a second lap of reaping work is started in the field.

Incidentally, there is a case in which a field contour 70 and a direction of grain culm rows are previously set and the headland 72A and the automatic travel allowable area 73A (travel route) are calculated based on the preset field contour 70. If an actual direction of grain culm rows is inclined to the preset row direction, an actually-formed headland 72A and an actually-formed automatic travel allowable area 73A will not match the calculated headland 72A and the calculated automatic travel allowable area 73A, since the combine 1 performs the reaping work along the actual direction of grain culm rows. Therefore, when an automatic operation is executed in the automatic travel allowable area 73A calculated from the preset field contour 70, etc., there is a possibility of leaving unreaped, etc. Thus, the combine 1 according to this embodiment has a function to generate the unworked site 73 (the automatic travel allowable area 73A) based on the information obtained when the vehicle body is actually driven straight ahead.

As illustrated in Fig. 3, the field information setting unit 60 has a straight line generation unit 65 and an unworked site generation unit 66. The straight line generation unit 65 and the unworked site generation unit 66 are each realized when the arithmetic processing unit 50 executes arithmetic processing according to the program or the like stored in the memory unit 51.

### <Straight Line Generation Unit>

The straight line generation unit 65 determines lowering the reaping part 3 from its raised position to its lowered position as a start of one reaping work (one straight advance step), and stores the associated position in the memory unit 51 as a work start position P1. The straight line generation unit 65 determines raising the reaping part 3 from its lowered position to its raised position as an end of one reaping work, and stores the associated position in the memory unit 51 as a work end position P2. Furthermore, the straight line generation unit 65 determines starting and ending the automatic operation along the straight advance routes S as the start and end of one reaping work, and store the associated positions in the memory unit 51 as the work start position P1 and the work end position P2. Still furthermore, the straight line generation unit 65 may also store the positions where the operator inputs the start and end of a reaping work through the touch panel 30 or the like, as the work start position P1 and the work end position P2 in the memory unit 51, respectively. Here, the positioning unit 34 continuously (at predetermined time intervals) acquires measurement points 71 from the work start position P1 to the work end position P2 through one reaping work.

As illustrated in Fig. 6, the straight line generation unit 65 generates a work straight line 75 based on the measurement points 71 acquired between the work start position P1 and the work end position P2 through one reaping work executed manually or automatically. In other words, the straight line generation unit 65 generates the work straight line 75 for each straight advance step. Specifically, the straight line generation unit 65 calculates the work straight line 75 by linearly approximating a traveling locus composed of a plurality of acquired measurement points 71. The work straight line 75 is formed at a boundary between the worked site 72 (headland 72A) and the unworked site 73 (automatic travel allowable area 73A) (see Fig. 4 and Fig. 5). Since the traveling locus (the plurality of measurement points 71) is a movement locus of a moving GPS antenna 36, the straight line generation unit 65 calculates the work straight line 75 while reflecting the misalignment between the moving GPS antenna 36 and the left end of a divider 13 into the calculation result. Here, the work straight line 75 is formed by using the position information (coordinate data) of two points (the start point and the end point). The straight line generation unit 65 stores the position information (coordinate data) of the work straight line 75 in the memory unit 51. The work straight line 75 is calculated to be longer than the distance obtained by the position information between the actual two points, taking into account calculation errors, and the position information indicating the work straight line 75 that is longer than in reality is stored in the memory unit 51.

As a specific example of the method for generating (calculating) the work straight line 75, the straight line generation unit 65 may use a straight line passing through more measurement points 71 as the work straight line 75, or a straight line approximated using the least-squares method as the work straight line 75. Furthermore, the straight line generation unit 65 may use a straight line connecting the work start position P1 and the work end position P2 as the work straight line 75, or may use the straight line connecting a plurality of manually or automatically selected measurement points 71 as the work straight line 75. For the work straight line 75 other than that connects the work start position P1 and the work end position P2, the start and end positions of the work straight line 75 may not coincide with the work start and work end positions P1 and P2, respectively.

### <Unworked Site Generation Unit>

As illustrated in Fig. 7, each time the work straight line 75 is generated by the straight line generation unit 65, the unworked site generation unit 66 calculates the intersection points 76 of the work straight lines 75 crossing one another. The unworked site generation unit 66 stores the position information (coordinate data) of the intersection point 76 and the order in which the intersection point 76 was calculated in the memory unit 51. In the example illustrated in Fig. 7, the combine 1 travels straight from the lower right corner to the upper right corner of the field, changes direction (turns) at the upper right corner of the field, and then travels straight from the upper right corner to the upper left corner of the field. When the straight line generation unit 65 generates the work straight line 75 for each straight advance step, the first intersection point 76 is set at the upper right corner of the field. Then, as illustrated in Fig. 4, the combine 1 makes one lap of counterclockwise rounding around the field while repeatedly alternating straight advance and turn, whereby the work straight lines 75 are sequentially generated, and intersection points 76 are set at the crossings of the work straight lines 75. In other words, with the first lap of round reaping around the field being completed, four intersection points 76 are set in clockwise order from the upper right corner of the field.

As illustrated in Fig. 4, when the four work straight lines 75 intersect to form a closed area, the unworked site generation unit 66 generates an unworked site 73 that forms a rectangle with the four intersection points 76 as vertices. In other words, the unworked site 73 is generated within the area connecting the four intersection points 76 in the order of calculation.

In detail, the unworked site generation unit 66 determines whether the closed area has been constituted by at least three work straight lines 75. If the number of work straight lines 75 generated is less than three, or if the work straight lines 75 do not constitute a closed area, the unworked site generation unit 66 waits for the next work straight line 75 to be generated. On the other hand, if three or more work straight lines 75 constitute a closed area, the unworked site generation unit 66 sets the last calculated intersection point 76 as a start point 76A. If at least three intersection points 76 including the start point 76Aare found as a result of searching for the intersection points 76 clockwise from the start point 76A, the unworked site generation unit 66 generates a first polygon 77. If at least three intersection points 76 including the start point 76A are found as a result of searching for the intersection points 76 counterclockwise from the start point 76A, the unworked site generation unit 66 generates a second polygon 78. If only one of the first polygon 77 and the second polygon 78 is generated, the unworked site generation unit 66 sets the generated one of the first polygon 77 and the second polygon 78 as the unworked site 73. On the other hand, if both the first polygon 77 and the second polygon 78 are generated, the unworked site generation unit 66 sets the one with the larger area of the first polygon 77 and the second polygon 78 as the unworked site 73.

The unworked site generation unit 66 stores the set unworked site 73 (intersection points 76) in the memory unit 51 and deletes from the memory unit 51 the intersection point 76 that does not constitute the unworked site 73. Furthermore, as already described, when the second lap of round reaping around the field is completed, the unworked site generation unit 66 sets and stores in the memory unit 51 the worked site 72 as the headland 72A and the unworked site 73 as the automatic travel allowable area 73A, which unworked site 73 has as vertices three or more intersection points 76 that remain undeleted. The field contour 70, the worked site 72 (headland 72A), the unworked site 73 (automatic travel allowable area 73A), the work straight line 75, the intersection point 76, etc., are displayed as a part of the field information on the touch panel 30 or the like.

For example, as illustrated in Fig. 4, when the first lap of round reaping around the field is completed, the last calculated intersection point 76 (start point 76A) is the intersection point 76 at the lower right corner of the field. In this case, searching for the intersection points 76 clockwise from the start point 76A does not find intersection point 76, so the first polygon 77 is not generated. On the other hand, when searching for the intersection points 76 counterclockwise from the start point 76A, four intersection points 76 are found including the start point 76A, so the second polygon 78 with the four intersection points 76 as vertices is generated, which is set as the unworked site 73. When the first lap of round reaping around the field is completed, the above-described search for intersection points 76 may be omitted and a closed area composed of the four work straight lines 75 may be set as the unworked site 73. In other words, the unworked site 73 may be calculated by simply reading the four intersection points 76 stored in the memory unit 51.

Furthermore, for example, as illustrated in Fig. 8, if the second lap of round reaping around the field is started and one new work straight line 75 is generated, this new work straight line 75 intersects the second generated work straight line 75 and the fourth generated work straight lines 75, and two new intersection points 76 are calculated at the lower right and upper right portions of the field. In this case, the intersection point 76 in the upper right corner of the field is the start point 76A. When searching for the intersection points 76 clockwise from the start point 76A, the four intersection points 76 including the start point 76A (see the four white circles in Fig. 8) are found, while when searching for the intersection points 76 counterclockwise from the start point 76A, the four intersection points 76 including the start point 76A are also found (see the two white circles and two black circles in Fig. 8). Therefore, the unworked site generation unit 66 generates the first polygon 77 and the second polygon 78, calculates and compares the area of the first polygon 77 and the area of the second polygon 78, and sets the second polygon 78 with the larger area as the unworked site 73. The two intersection points 76 (the two black circles shown in Fig. 8) in the lower right and upper right corners of the field that no longer constitute the unworked site 73 are deleted.

Furthermore, as illustrated in Fig. 5, when the second lap of round reaping around the field is completed, a headland 72A is formed, and the unworked site 73, which has as vertices the four intersection points 76 remaining at that time, is set as the automatic travel allowable area 73A. The work straight line 75 for the first lap of round reaping and the work straight line 75 for the second lap of round reaping adjacent to the inside thereof are formed generally parallel to each other.

### [Unworked Site Calculation Method]

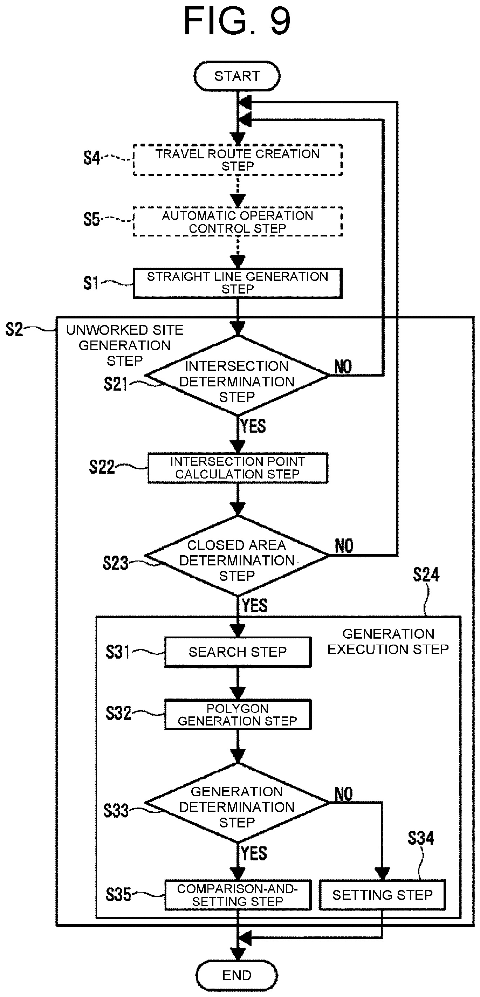

Next, an unworked site calculation method for generating the unworked site 73 (the automatic travel allowable area 73A) by round reaping around the field will be described with reference to Fig. 4 through Fig. 9. Fig. 9 is a flow chart illustrating an unworked site calculation method.

For example, the operator boards the driver's seat 29 of the combine 1 and performs round reaping around the field counterclockwise (see Fig. 4 and Fig. 5). As already explained, the first lap of round reaping around the field is performed by manual traveling by the operator, and the second lap of round reaping around the field is performed manual traveling by the operator or automatic operation. The positioning unit 34 acquires the position information (measurement point 71) of the vehicle body (the combine 1) from the satellite positioning system at predetermined time intervals.

As illustrated in Fig. 9, the unworked site calculation method includes a straight line generation step S1 and an unworked site generation step S2.

### <Straight Line Generation Step>

At the straight line generation step S1, the straight line generation unit 65 generates the work straight line 75 based on the measurement points 71 acquired between the work start position P1 and the work end position P2 in one step (see Fig. 6).

### <Unworked Site Generation Step>

As illustrated in Fig. 9, the unworked site generation step S2 includes an intersection determination step S21, an intersection point calculation step S22, a closed area determination step S23, and a generation execution step S24.

### (Intersection Determination Step and Intersection Point Calculation Step)

At the intersection determination step S21, each time a work straight line 75 is generated, the unworked site generation unit 66 determines whether there are the work straight lines 75 crossing one another. If there are any intersecting work straight lines 75 (YES at the intersection determination step S21), the unworked site generation unit 66, at the intersection point calculation step S22, calculates the intersection point 76 between the work straight lines 75. However, if there are no intersecting work straight line 75 (NO at the intersection determination step S21), the unworked site generation unit 66 returns to the straight line generation step S1, and waits for the next work straight line 75 to be generated.

### (Closed Area Determination Step and Generation Execution Step)

After the intersection point 76 is calculated, the unworked site generation unit 66, at the closed area determination step S23, determines whether at least three work straight lines 75 have intersected to form a closed area. If a closed area (see Fig. 4 and Fig. 5) is constituted (YES at the closed area determination step S23), the unworked site generation unit 66 generates an unworked site 73 that forms a polygon with at least three intersection points 76 as vertices. However, if no closed area is constituted (NO at the closed area determination step S23), the unworked site generation unit 66 returns to the straight line generation step S1, and waits for the next work straight line 75 to be generated.

### (Details of Generation Execution Step)

As illustrated in Fig. 9, the generation execution step S24 includes a search step S31, a polygon generation step S32, a generation determination step S33, a setting step S34, and a comparison and setting step S35.

### (Search Step)

At the search step S31, the unworked site generation unit 66 sets the last calculated intersection point 76 as the start point 76A, and searches for the intersection points 76 clockwise from the start point 76A and searches for the intersection points 76 counterclockwise from the start point 76A.

### (Polygon Generation Step)

At the polygon generation step S32, if the clockwise search finds three intersection points 76 including at least the start point 76A, the unworked site generation unit 66 generates the first polygon 77 (see Fig. 8). Furthermore, at the polygon generation step S32, if the counterclockwise search finds three intersection points 76 including at least the start point 76A, the unworked site generation unit 66 generates the second polygon 78 (see Fig. 8). However, at the polygon generation step S32, if at least three intersection points 76 are not found as a result of the clockwise or counterclockwise search, the unworked site generation unit 66 generates neither the first polygon 77 nor the second polygon 78.

### (Generation Determination Step, Setting Step, and Comparison and Setting Step)

At the generation determination step S33, the unworked site generation unit 66 determines whether both the first polygon 77 and the second polygon 78 have been generated. If only one of the first polygon 77 and the second polygon 78 has been generated (NO at the generation determination step S33), the unworked site generation unit 66, at the setting step S34, sets the generated one of the first polygon 77 and the second polygon 78 as the unworked site 73. However, if both the first polygon 77 and the second polygon 78 have been generated (YES at the generation determination step S33), the area of the first polygon 77 and the area of the second polygon 78 are calculated, and the one with the larger area of the first polygon 77 and the second polygon 78 is set as the unworked site 73, at the comparison and setting step S35.

### (Travel Route Creation Step and Automatic Operation Control Step)

When automatic straight advance is performed during the second lap of round reaping around the field, the unworked site calculation method includes a travel route creation step S4 and an automatic operation control step S5. The travel route creation step S4 and the automatic operation control step S5 are executed prior to the straight line generation step S1. Since the second lap of round reaping around the field may be done manually, the travel route creation step S4 and the automatic operation control step S5 are indicated by dashed lines in Fig. 9.

At the travel route creation step S4, the travel route creation unit 62 generates the straight advance route S along at least one side of the unworked site 73 (or the field contour 70) inside the unworked site 73 (see Fig. 5). At the travel route creation step, the straight advance route S is generated so as to be generally parallel to the work straight line 75. At the automatic operation control step, the automatic operation control unit 63 executes the reaping work automatically along the straight advance route S. The work straight line 75 is generated by automatically executing the reaping work along the straight advance route S. At the travel route creation step S4, the straight advance route S may be generated based on the work start and work end positions P1 and P2 entered by the operator through the touch panel 30 or the like In the case of performing automatic straight advance (straight advance through the headland) along the field contour 70 (outer edge), even for the first lap of round reaping, the travel route creation step S4 and automatic operation control step S5 may be performed prior to the straight line generation step S1, as described above.

The unworked site 73 (automatic travel allowable area 73A) is thus generated by round reaping around the field (see Fig. 5). Thereafter, the travel route creation unit 62 generates the travel route, which is referenced for performing the automatic operation, inside the automatic travel allowable area 73A. Before generating the travel route, the travel route creation unit 62 determines whether it is possible to generate the travel route for the unworked site 73. If it is possible to generate the travel route, the travel route creation unit 62 enables the function of the buttons displayed on the touch panel or the like. When the operator touches the button displayed on the touch panel or the like, the combine 1 switches to an automatic traveling mode. The travel route creation unit 62 sets up the travel route combination of a plurality of linear routes that are generally parallel to the straight advance routes S and the work straight lines 75. In addition, information indicating how far in advance the reaping has to be done to make it possible to generate the relevant travel route (a route generation allowable area) is stored in the memory unit 51, and the route generation allowable area is displayed on the touch panel or the like. This allows the operator to check the route generation allowable area displayed on the touch panel or the like. Furthermore, it is also possible to notify the operator of how far the reaping has to be done to make it possible to generate the relevant travel route.

According to the combine 1 (unworked site calculation method) of the embodiment described above, it is possible to generate the work straight line 75 each time one reaping work is completed, and to generate an unworked site 73 with the intersection points 76 of the work straight lines 75 as vertices. This enables to obtain the unworked site 73 easily, compared with a case, for example, where the unworked site 73 is obtained by setting a lot of points (positions) after one lap of round reaping around the field, and connecting the positions with lines. According to the combine 1 (unworked site calculation method) of the embodiment, it is possible to set the headland 72A and the automatic travel allowable area 73A by executing the reaping work along the actual direction of grain culm rows. As a result, a travel route that matches the actual row direction is set for the automatic travel allowable area 73A, so that it is possible to realize the automatic operation with minimum remaining unreaped crop.

According to the combine 1 (unworked site calculation method) of the embodiment, the latest unworked site 73 can be obtained using the last calculated intersection point 76 (the start point 76A) as a reference. This allows the unworked site 73, which narrows as the reaping works continue, to be constantly updated with the latest unworked site 73.

Furthermore, for the combine 1 (unworked site calculation method) according the embodiment, concerning the second lap of round reaping around the field, it is possible to perform the reaping work while performing the automatic straight advance (straight advance through the headland), and it is possible to obtain the work straight line 75 for each automatic reaping work. Thus, it is possible to obtain the unworked site easily. Furthermore, since it is possible to acquire the work straight line 75 based on a plurality of measurement points 71 that are continuously acquired from the start to the end of the reaping work, it is allowed to acquire the work straight line 75 with less deviation along the actual straight advance of the combine 1.

### [First Modification]

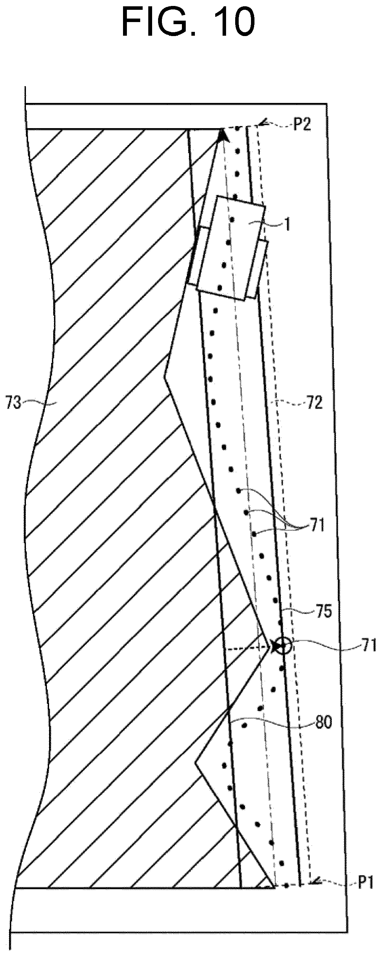

Next, a combine 1 (unworked site calculation method) according to a first modification of the embodiment will be described with reference to Fig. 10. Fig. 10 is a plan view illustrating a state in which one reaping work has been performed in the field. In the following description, components equivalent or corresponding to those of the combine 1 (the unworked site calculation method) already described are designated by the same reference numerals, and explanation thereof will be omitted.

There may be a case in which grain crops are not planted straight along the row direction at the outer edge region of the unworked site 73. In other words, there may be a case in which the outer edge of the unworked site 73 is unevenly formed. In such a case, the combine 1 has to perform the reaping work with the outer edge of the unworked site 73 extending meandering along the unevenness. If the work straight line 75 is generated by linear approximation of the plurality of measurement points 71 acquired during this reaping work, the work straight line 75 may overlap with a portion of the unworked site 73. In other words, there may be a case in which an area that has not actually been reaped if set as the worked site 72, so that some unreaped grain culms remain in the worked site 72. Therefore, the combine 1 (unworked site calculation method) according to the first modification has a function to prevent leaving unreaped in the worked site 72.

For the combine 1 (straight line generation step S1) according to the first modification, the straight line generation unit 65 generates a reference straight line 80 based on the plurality of measurement points 71 continuously acquired from the work start position P1 to the work end position P2 through one reaping work. The calculation method for the reference straight line 80 is similar to that for the work straight line 75. Then, at the straight line generation step S1, the straight line generation unit 65 determines the measurement point 71 that is farthest from the unworked site 73 across the reference straight line 80. In other words, the measurement point 71 that is outermost from the unworked site 73 is identified. Next, at the straight line generation step S1, the straight line generation unit 65 sets the work straight line 75 to pass through the identified measurement point 71 and to extend along (generally parallel to) the reference straight line 80.

For the combine 1 (unworked site calculation method) according to the first modification of the embodiment described above, the work straight line 75 is set to pass through the measurement point 71 that was farthest from the unworked site 73. According to this configuration, the worked site 72 is surely formed outside the unworked site 73, which prevents the area that is not actually reaped from being set as the worked site 72. As a result, the actual unworked site 73 does not enter the worked site 72, so that it is possible to prevent grain culms left unreaped. Furthermore, it is possible to acquire the reference straight line 80 with minimal deviation along the actual movement of the combine 1, based on the plurality of measurement points 71 that are continuously acquired during the reaping work.

For the combine 1 (unworked site calculation method) according to the first modification of the embodiment, the work straight line 75 is set generally parallel to the reference straight line 80. However, in this specification, the work straight line 75 being set along the reference straight line 80 is not limited to the work straight line 75 being parallel to the reference straight line 80, and is a concept that allows for a slight inclination. For example, if only within a degree that there is no leaving unreaped, the straight line generation unit 65 may set the work straight line 75 that passes through the identified measurement point 71 and is inclined with respect to the reference straight line 80 (not illustrated). Furthermore, for example, at the straight line generation step S1, the straight line generation unit 65 may move the reference straight line 80 so that it passes through the identified measurement points 71 (or more precisely, calculate the coordinates at which the reference straight line 80 is moved) and set the reference straight line 80 as the work straight line 75.

### [Second Modification]

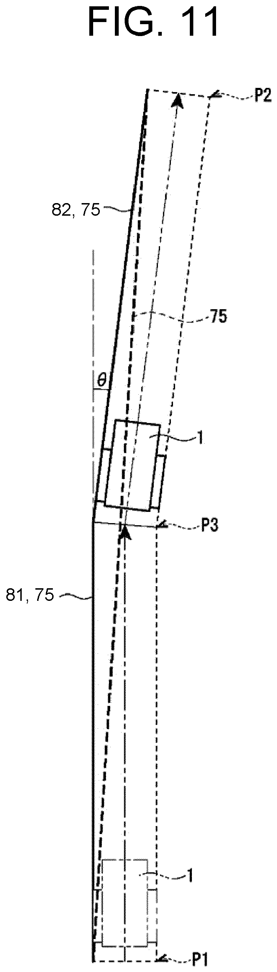

Next, a combine 1 (unworked site calculation method) according to a second modification of the embodiment will be described with reference to Fig. 11. Fig. 11 is a plan view illustrating a state in which the reaping work is resumed after interruption by the combine 1. In the following description, components equivalent or corresponding to those of the combine 1 (the unworked site calculation method) already described are designated by the same reference numerals, and explanation thereof will be omitted.

For example, there may be a case in which one reaping work (one straight advance step) is interrupted when a culm jam occurs in the reaping part 3 or threshing part 4, etc., and then the reaping work is resumed after the jam is cleared. In this case, the travel direction of the resumed reaping work may be slightly inclined with respect to the travel direction of the reaping work before interruption. Therefore, the combine 1 (unworked site calculation method) according to the second modification includes a function to generate a proper work straight line 75 even if one reaping work is stopped in the middle.

For the combine 1 (straight line generation step S1) according to the second modification, when one reaping work is interrupted and then resumed, the straight line generation unit 65 generates a first work straight line 81 based on the measurement points 71 (not illustrated in Fig. 11) acquired between the work start position P1 and a work interruption position P3, and generates a second work straight line 82 based on the measurement points 71 (not illustrated in Fig. 11) acquired between the work interruption position P3 and the work end position P2.

At the straight line generation step S1, if the inclination angle θ of the second work straight line 82 relative to the first work straight line 81 is within a predetermined range, the straight line generation unit 65 generates a straight line that connects the work start position P1 and the work end position P2 as the work straight line 75 (see the thick dashed line in Fig. 11). On the other hand, at the straight line generation step S1, if the inclination angle θ of the second work straight line 82 relative to the first work straight line 81 exceeds the predetermined range, the straight line generation unit 65 makes different the reaping work between the section from the work start position P1 to the work interruption position P3 and the section from the work interruption position P3 to the work end position P2, and sets the first work straight line 81 and the second work straight line 82 as different work straight lines 75 from each other. The predetermined range of inclination angle θ of the second work straight line 82 relative to the first work straight line 81 is set in the range of 1 to 10 degrees. The predetermined range of said inclination angle θ may be set freely according to the size and shape of the field, the experience of the operator, etc., or the operator may input a free value through the touch panel 30 or the like.

According to the combine 1 (unworked site calculation method) according to the second modification of the embodiment described above, even if one reaping work is stopped in the middle, if the inclination angle θ of the second work straight line 82 with respect to the first work straight line 81 is within the predetermined range, the second work straight line 82 may be treated as the single work straight line 75. Thus, it is possible to obtain the unworked site 73 easily with a small amount of calculation. The features of combine 1 (unworked site calculation method) according to the second modification may be applied to combine 1 (unworked site calculation method) according to the first modification.

For the combine 1 (unworked site calculation method) according to the embodiment (including the first and second modifications - hereinafter the same), the headland 72A and the automatic travel allowable area 73A are formed by two laps of round reaping around the field, but the present invention is not limited thereto. The headland 72A and the automatic travel allowable area 73A may be formed by a single lap or three or more laps of round reaping around the field.

Furthermore, for the combine 1 (unworked site calculation method) according to the embodiment, the travel route creation unit 62 generates the four straight advance routes S to extend along the periphery (four sides) of the unworked site 73, but the present invention is not limited thereto. The travel route creation unit 62 only needs to generate a straight advance route S to extend along at least one side of the unworked site 73 inside the unworked site 73. On the route (area) for which no straight advance route S is generated, the operator may manually travel the combine 1 straight ahead.

Furthermore, for the combine 1 (unworked site calculation method) according to the embodiment, the travel route is generated in the automatic travel allowable area 73A which is formed by two laps of round reaping around the field. The automatic travel allowable area 73A and travel route are generated by calculating the range in which the combine 1 does not collide with obstacles (such as an entrance to the field, a water valve, a drain, a culvert exhaust port, etc.) in the field during automatic operation. However, if the operator enters the automatic travel allowable area 73A and reaps within by manual travel after the travel route has been generated in the automatic travel allowable area 73A, the travel route may be changed such that the turning combine 1 collides with an obstacle. In this case, the control device 45 may execute a warning or alert to the operator by displaying on the touch panel 30 or the like that the operator may contact an obstacle. Alternatively, the field information setting unit 60 may reduce (change the shape of) the automatic travel allowable area 73A to the extent that the turning combine 1 does not collide with an obstacle, and the travel route creation unit 62 may generate a travel route on the reduced automatic travel allowable area 73A. In an area where there is a possibility of colliding with obstacles, it is preferable for the operator to travel the combine 1 manually. The combine 1 also allows the turning radius to be set according to the operator's operation, for example, by selecting from three levels: small, standard, and soft. Therefore, changing the turning radius may cause the turning combine 1 to change its travel route such that it collides with an obstacle. For example, if the turning radius is initially set to a small radius, but the turning radius is changed to a soft turn radius in the middle of the work, the turning path may cause the combine 1 to collide with an obstacle. In this case, the control device 45 may informs the operator, by displaying on the touch panel 30, etc., that setting of the turning radius may lead contacting an obstacle. If the turning radius is such that it will collide with an obstacle, the control device 45 may inform the operator, by displaying on the touch panel 30, etc., that changing to a turning radius that will not collide with an obstacle is prompted. If an area arises where the turning radius setting may cause the combine 1 to contact an obstacle, the control device 45 may automatically stop the combine 1 that is traveling automatically in this area, stop the automatic traveling, and allow the operator to travel the combine 1 manually. In this case, the control device 45 may inform the operator, by displaying on the touch panel 30, etc., that the area is likely to contact obstacles due to the setting of the turning radius and that the combine 1 is prompted to be driven manually. When the combine 1 leaves the area, the control device 45 may inform the operator, by displaying on the touch panel 30, etc., that the combine 1 has left the area and that the combine 1 is now enabled to continue automatic traveling.

Furthermore, the combine 1 (unworked site calculation method) according to the embodiment performs round reaping around a rectangular field, so that the four work straight lines 75 constitute a rectangular closed area and the unworked site 73 formed in a quadrilateral with the four intersection points 76 as vertices, but the present invention is not limited thereto. The unworked site generation unit 66 needs to generate the unworked site 73 that forms a polygon with at least three intersection points 76 as vertices when at least three work straight lines 75 intersect to form a closed area.

Furthermore, for the combine 1 according to this embodiment, the touch panel 30 or the touch panel of the portable terminal 53 (the tablet terminal) serves as the display unit for displaying information and the input unit for receiving a man-made operation, but the present invention is not limited thereto. For example, the steering part 9 may be equipped with a notebook personal computer in place of the touch panel 30 (not illustrated). Similarly, for example, the portable terminal 53 may be a notebook personal computer (not illustrated). In these cases, an LCD display is an example of the display unit, and a keyboard and a mouse are examples of the input unit.

For the combine 1 according to the embodiment, the touch panel 30 is provided as a separate component from the portable terminal 53. However, the present invention is not limited thereto. The touch panel 30 may be provided detachably, and the touch panel 30 may be used as the portable terminal 53.

For the combine 1 according to this embodiment, the touch panel 30 or the like, serves as both of the display unit that displays the information and the input unit that accepts the man-made operation, but the present invention is not limited thereto. For example, the display unit such as the liquid-crystal display may separately be provided from the input unit including the keyboard, the mouse, a button, a switch, or the like (not illustrated).

The foregoing embodiment has been described to present one aspect of the combine and unworked site calculation method according to the present invention. Thus, the technical scope of the present invention is not limited to the foregoing embodiment. The technical scope of the present invention is not limited to the embodiments described above.

### DESCRIPTION OF REFERENCE NUMERALS

1 Combine
34 Positioning unit
62 Travel route creation unit
63 Automatic operation control unit
65 Straight line generation unit
66 Unworked site generation unit
71 Measurement point
73 Unworked site
75 Work straight line
76 Intersection point
77 First polygon
78 Second polygon
80 Reference straight line
81 First work straight line
82 Second work straight line
P1 Work start position
P2 Work end position
θ Inclination angle
S1 Straight line generation step
S2 Unworked site generation step
S4 Travel route creation step
S5 Automatic operation control step

## Claims

1. A combine (1) that generates an unworked site (73) of a field by round reaping in which a vehicle body performs a reaping work while repeating straight advance and turn, the combine (1) comprising:
a positioning unit (34) that acquires a measurement point (71) indicating a position of the vehicle body;
a straight line generation unit (65) that generates a work straight line (75) based on the measurement point (71) acquired between a work start position (P1) and a work end position (P2) through one round of the reaping work; and
**characterized in that** an unworked site generation unit (66) calculates an intersection point (76) of the work straight lines (75) crossing one another each time the work straight line (75) is generated, and generates the unworked site (73) that forms a polygon with at least three of the intersection points (76) as vertices, when at least three of the work straight lines (75) cross to constitute a closed area.

2. The combine (1) according to claim 1, wherein the unworked site generation unit (66)
sets the intersection point (76) that is calculated last as a start point;
generates a first polygon (77) if at least three of the intersection points (76) including the start point are found as a result of searching for the intersection points (76) clockwise from the start point;
generates a second polygon (78) if at least three of the intersection points (76) including the start point are found as a result of searching for the intersection points (76) counterclockwise from the start point; and
if only one of the first polygon (77) and the second polygon (78) is generated, sets the generated one of the first polygon (77) and the second polygon (78) as the unworked site (73), and
if both the first polygon (77) and the second polygon (78) are generated, sets one with a larger area of the first polygon (77) and the second polygon (78) as the unworked site (73).

3. The combine (1) according to claim 1 or 2, wherein
the positioning unit (34) continuously acquires the measurement points (71) from the work start position (P1) to the work end position (P2) through one round of the reaping work, and
the straight line generation unit (65) generates a reference straight line (80) based on a plurality of the acquired measurement points (71), and sets the work straight line (75) to pass through the measurement point (71) that is farthest from the unworked site (73) across the reference straight line (80) and to extend along the reference straight line (80).

4. The combine (1) according to any one of claims 1 to 3, wherein when one round of the reaping work is interrupted and then resumed, the straight line generation unit (65) generates a first work straight line (81) based on the measurement point (71) acquired between the work start position (P1) and a work interruption position (P3), and generates a second work straight line (82) based on the measurement point (71) acquired between the work interruption position (P3) and the work end position (P2), and
if an inclination angle (θ) of the second work straight line (82) relative to the first work straight line (81) is within a predetermined range, the straight line generation unit (65) generates a straight line that connects the work start position (P1) and the work end position (P2) as the work straight line (75),
whereas if the inclination angle (θ) of the second work straight line (82) relative to the first work straight line (81) exceeds the predetermined range, the straight line generation unit (65) makes different the reaping work between a section from the work start position (P1) to the work interruption position (P3) and a section from the work interruption position (P3) to the work end position (P2), and sets the first work straight line (81) and the second work straight line (82) as different work straight lines (75) from each other.

5. The combine (1) according to any one of claims 1 to 4, further comprising:
a travel route creation unit (62) that generates a straight advance route (S) in the unworked site (73); and
an automatic operation control unit (63) that executes the reaping work automatically along the straight advance route (S),
wherein the work straight line (75) is generated by executing the reaping work automatically along the straight advance route (S).

6. An unworked site (73) calculation method for generating an unworked site (73) of a field by round reaping in which a vehicle body performs a reaping work while repeating straight advance and turn, comprising:
a straight line generation step (S1) of generating a work straight line (75) based on a measurement point (71) indicating a position of the vehicle body, which is acquired between a work start position (P1) and a work end position (P2) through one round of the reaping work; and
an unworked site generation step (S2) of calculating an intersection point (76) of the work straight lines (75) crossing one another each time the work straight line (75) is generated and generating the unworked site (73) that forms a polygon with at least three of the intersection points (76) as vertices, when at least three of the work straight lines (75) cross to constitute a closed area,
the steps of the calculation method being executed by at least one processor.

7. The unworked site (73) calculation method according to claim 6, wherein the unworked site generation step (S2) comprises:
setting the intersection point (76) that is calculated last as a start point;
generating a first polygon (77) if at least three of the intersection points (76) including the start point are found as a result of searching for the intersection points (76) clockwise from the start point;
generating a second polygon (78) if at least three of the intersection points (76) including the start point are found as a result of searching for the intersection points (76) counterclockwise from the start point; and
if only one of the first polygon (77) and the second polygon (78) is generated, setting the generated one of the first polygon (77) and the second polygon (78) as the unworked site (73),
whereas if both the first polygon (77) and the second polygon (78) are generated, setting one with a larger area of the first polygon (77) and the second polygon (78) as the unworked site (73).

8. The unworked site (73) calculation method according to claim 6 or 7, wherein the straight line generation step (S1) comprises: generating a reference straight line (80) based on a plurality of the measurement points (71) that are continuously acquired from the work start position (P1) to the work end position (P2) through one round of the reaping work, and setting the work straight line (75) to pass through the measurement point (71) that is farthest from the unworked site (73) across the reference straight line (80) and to extend along the reference straight line (80).

9. The unworked site (73) calculation method according to any one of claims 6 to 8, wherein
the straight line generation step (S1) comprises when one round of the reaping work is interrupted and then resumed, generating a first work straight line (81) based on the measurement point (71) acquired between the work start position (P1) and a work interruption position (P3), and generating a second work straight line (82) based on the measurement point (71) acquired between the work interruption position (P3) and the work end position (P2), and
the straight line generation step (S1) comprises:
if an inclination angle (θ) of the second work straight line (82) relative to the first work straight line (81) is within a predetermined range, generating a straight line that connects the work start position (P1) and the work end position (P2) as the work straight line (75),
whereas if the inclination angle (θ) of the second work straight line (82) relative to the first work straight line (81) exceeds the predetermined range, making different the reaping work between a section from the work start position (P1) to the work interruption position (P3) and a section from the work interruption position (P3) to the work end position (P2), and setting the first work straight line (81) and the second work straight line (82) as different work straight lines (75) from each other.

10. The unworked site (73) calculation method according to any one of claims 6 to 9, further comprising:
a travel route creation step (S4) of generating a straight advance route (S) in the unworked site (73); and
an automatic operation control step (S5) of automatically executing the reaping work along the straight advance route (S),
wherein the work straight line (75) is generated by automatically executing the reaping work along the straight advance route (S).

## Patentansprüche

1. Mähdrescher (1), der einen unbearbeiteten Bereich (73) eines Feldes durch Rundernten erzeugt, bei welchem ein Fahrzeugkörper eine Erntearbeit ausführt, während er geradlinige Vorwärtsbewegung und Wenden wiederholt, wobei der Mähdrescher (1) umfasst:
eine Positionierungseinheit (34), die einen Messpunkt (71) erfasst, der eine Position des Fahrzeugkörpers angibt;
eine Geradenerzeugungseinheit (65), die eine Arbeitsgerade (75) auf der Grundlage des Messpunkts (71) erzeugt, der zwischen einer Arbeitsstartposition (P1) und einer Arbeitsendposition (P2) durch eine Runde der Erntearbeit erfasst wird; und
**dadurch gekennzeichnet, dass** eine Erzeugungseinheit für den unbearbeiteten Bereich (66) jedes Mal, wenn die Arbeitsgerade (75) erzeugt wird, einen Schnittpunkt (76) der einander kreuzenden Arbeitsgeraden (75) berechnet und den unbearbeiteten Bereich (73) erzeugt, der ein Polygon mit mindestens drei der Schnittpunkte (76) als Eckpunkte bildet, wenn sich mindestens drei der Arbeitsgeraden (75) kreuzen, um eine geschlossene Fläche zu bilden.

2. Mähdrescher (1) nach Anspruch 1, wobei die Erzeugungseinheit für den unbearbeiteten Bereich (66)
den zuletzt berechneten Schnittpunkt (76) als Startpunkt festlegt;
ein erstes Polygon (77) erzeugt, wenn mindestens drei der Schnittpunkte (76) einschließlich des Startpunkts als Ergebnis einer Suche nach den Schnittpunkten (76) im Uhrzeigersinn ausgehend vom Startpunkt gefunden werden;
ein zweites Polygon (78) erzeugt, wenn mindestens drei der Schnittpunkte (76) einschließlich des Startpunkts als Ergebnis einer Suche nach den Schnittpunkten (76) gegen den Uhrzeigersinn ausgehend vom Startpunkt gefunden werden; und wenn nur eines von dem ersten Polygon (77) und dem zweiten Polygon (78) erzeugt wird, das erzeugte von dem ersten Polygon (77) und dem zweiten Polygon (78) als den unbearbeiteten Bereich (73) festlegt, und
wenn sowohl das erste Polygon (77) als auch das zweite Polygon (78) erzeugt werden, dasjenige mit einer größeren Fläche von dem ersten Polygon (77) und dem zweiten Polygon (78) als den unbearbeiteten Bereich (73) festlegt.

3. Mähdrescher (1) nach Anspruch 1 oder 2, wobei
die Positionierungseinheit (34) die Messpunkte (71) von der Arbeitsstartposition (P1) bis zur Arbeitsendposition (P2) durch eine Runde der Erntearbeit kontinuierlich erfasst, und
die Geradenerzeugungseinheit (65) eine Referenzgerade (80) auf der Grundlage einer Vielzahl der erfassten Messpunkte (71) erzeugt und die Arbeitsgerade (75) so einstellt, dass sie durch den Messpunkt (71) verläuft, der am weitesten von dem unbearbeiteten Bereich (73) über die Referenzgerade (80) hinweg entfernt ist, und sich entlang der Referenzgerade (80) erstreckt.

4. Mähdrescher (1) nach einem der Ansprüche 1 bis 3, wobei, wenn eine Runde der Erntearbeit unterbrochen und dann wieder aufgenommen wird, die Geradenerzeugungseinheit (65) eine erste Arbeitsgerade (81) auf der Grundlage des Messpunkts (71) erzeugt, der zwischen der Arbeitsstartposition (P1) und einer Arbeitsunterbrechungsposition (P3) erfasst wird, und eine zweite Arbeitsgerade (82) auf der Grundlage des Messpunkts (71) erzeugt, der zwischen der Arbeitsunterbrechungsposition (P3) und der Arbeitsendposition (P2) erfasst wird, und
wenn ein Neigungswinkel (θ) der zweiten Arbeitsgerade (82) relativ zur ersten Arbeitsgerade (81) innerhalb eines vorbestimmten Bereichs liegt, die Geradenerzeugungseinheit (65) eine Gerade, die die Arbeitsstartposition (P1) und die Arbeitsendposition (P2) verbindet, als die Arbeitsgerade (75) erzeugt, wohingegen, wenn der Neigungswinkel (θ) der zweiten Arbeitsgerade (82) relativ zur ersten Arbeitsgerade (81) den vorbestimmten Bereich überschreitet, die Geradenerzeugungseinheit (65) die Erntearbeit zwischen einem Abschnitt von der Arbeitsstartposition (P1) zur Arbeitsunterbrechungsposition (P3) und einem Abschnitt von der Arbeitsunterbrechungsposition (P3) zur Arbeitsendposition (P2) unterschiedlich gestaltet und die erste Arbeitsgerade (81) und die zweite Arbeitsgerade (82) als voneinander verschiedene Arbeitsgeraden (75) festlegt.

5. Mähdrescher (1) nach einem der Ansprüche 1 bis 4, ferner umfassend:
eine Fahrwegerzeugungseinheit (62), die eine geradlinige Vorwärtsroute (S) in dem unbearbeiteten Bereich (73) erzeugt; und
eine Automatikbetriebssteuerungseinheit (63), die die Erntearbeit automatisch entlang der geradlinigen Vorwärtsroute (S) ausführt,
wobei die Arbeitsgerade (75) durch automatisches Ausführen der Erntearbeit entlang der geradlinigen Vorwärtsroute (S) erzeugt wird.

6. Verfahren zur Berechnung eines unbearbeiteten Bereichs (73) zum Erzeugen eines unbearbeiteten Bereichs (73) eines Feldes durch Rundernten, bei welchem ein Fahrzeugkörper eine Erntearbeit ausführt, während er geradlinige Vorwärtsbewegung und Wenden wiederholt, umfassend:
einen Geradenerzeugungsschritt (S1) des Erzeugens einer Arbeitsgerade (75) auf der Grundlage eines Messpunkts (71), der eine Position des Fahrzeugkörpers angibt und der zwischen einer Arbeitsstartposition (P1) und einer Arbeitsendposition (P2) durch eine Runde der Erntearbeit erfasst wird; und
einen Erzeugungsschritt für einen unbearbeiteten Bereich (S2) des Berechnens eines Schnittpunkts (76) der einander kreuzenden Arbeitsgeraden (75) jedes Mal, wenn die Arbeitsgerade (75) erzeugt wird, und des Erzeugens des unbearbeiteten Bereichs (73), der ein Polygon mit mindestens drei der Schnittpunkte (76) als Eckpunkte bildet, wenn sich mindestens drei der Arbeitsgeraden (75) kreuzen, um eine geschlossene Fläche zu bilden,
wobei die Schritte des Berechnungsverfahrens von mindestens einem Prozessor ausgeführt werden.

7. Verfahren zur Berechnung des unbearbeiteten Bereichs (73) nach Anspruch 6, wobei der Erzeugungsschritt für den unbearbeiteten Bereich (S2) umfasst:
Festlegen des zuletzt berechneten Schnittpunkts (76) als Startpunkt;
Erzeugen eines ersten Polygons (77), wenn mindestens drei der Schnittpunkte (76) einschließlich des Startpunkts als Ergebnis einer Suche nach den Schnittpunkten (76) im Uhrzeigersinn ausgehend vom Startpunkt gefunden werden;
Erzeugen eines zweiten Polygons (78), wenn mindestens drei der Schnittpunkte (76) einschließlich des Startpunkts als Ergebnis einer Suche nach den Schnittpunkten (76) gegen den Uhrzeigersinn ausgehend vom Startpunkt gefunden werden; und
wenn nur eines von dem ersten Polygon (77) und dem zweiten Polygon (78) erzeugt wird, Festlegen des erzeugten von dem ersten Polygon (77) und dem zweiten Polygon (78) als den unbearbeiteten Bereich (73), wohingegen, wenn sowohl das erste Polygon (77) als auch das zweite Polygon (78) erzeugt werden, Festlegen desjenigen mit einer größeren Fläche von dem ersten Polygon (77) und dem zweiten Polygon (78) als den unbearbeiteten Bereich (73).

8. Verfahren zur Berechnung des unbearbeiteten Bereichs (73) nach Anspruch 6 oder 7, wobei der Geradenerzeugungsschritt (S1) umfasst: Erzeugen einer Referenzgerade (80) auf der Grundlage einer Vielzahl der Messpunkte (71), die kontinuierlich von der Arbeitsstartposition (P1) bis zur Arbeitsendposition (P2) durch eine Runde der Erntearbeit erfasst werden, und Einstellen der Arbeitsgerade (75) derart, dass sie durch den Messpunkt (71) verläuft, der am weitesten von dem unbearbeiteten Bereich (73) über die Referenzgerade (80) hinweg entfernt ist, und sich entlang der Referenzgerade (80) erstreckt.

9. Verfahren zur Berechnung des unbearbeiteten Bereichs (73) nach einem der Ansprüche 6 bis 8, wobei
der Geradenerzeugungsschritt (S1) umfasst, wenn eine Runde der Erntearbeit unterbrochen und dann wieder aufgenommen wird, Erzeugen einer ersten Arbeitsgerade (81) auf der Grundlage des Messpunkts (71), der zwischen der Arbeitsstartposition (P1) und einer Arbeitsunterbrechungsposition (P3) erfasst wird, und Erzeugen einer zweiten Arbeitsgerade (82) auf der Grundlage des Messpunkts (71), der zwischen der Arbeitsunterbrechungsposition (P3) und der Arbeitsendposition (P2) erfasst wird, und
der Geradenerzeugungsschritt (S1) umfasst:
wenn ein Neigungswinkel (θ) der zweiten Arbeitsgerade (82) relativ zur ersten Arbeitsgerade (81) innerhalb eines vorbestimmten Bereichs liegt, Erzeugen einer Gerade, die die Arbeitsstartposition (P1) und die Arbeitsendposition (P2) verbindet, als die Arbeitsgerade (75),
wohingegen, wenn der Neigungswinkel (θ) der zweiten Arbeitsgerade (82) relativ zur ersten Arbeitsgerade (81) den vorbestimmten Bereich überschreitet, unterschiedliches Gestalten der Erntearbeit zwischen einem Abschnitt von der Arbeitsstartposition (P1) zur Arbeitsunterbrechungsposition (P3) und einem Abschnitt von der Arbeitsunterbrechungsposition (P3) zur Arbeitsendposition (P2) und Festlegen der ersten Arbeitsgerade (81) und der zweiten Arbeitsgerade (82) als voneinander verschiedene Arbeitsgeraden (75).

10. Verfahren zur Berechnung des unbearbeiteten Bereichs (73) nach einem der Ansprüche 6 bis 9, ferner umfassend:
einen Fahrwegerzeugungsschritt (S4) des Erzeugens einer geradlinigen Vorwärtsroute (S) in dem unbearbeiteten Bereich (73); und
einen Automatikbetriebssteuerungsschritt (S5) des automatischen Ausführens der Erntearbeit entlang der geradlinigen Vorwärtsroute (S),
wobei die Arbeitsgerade (75) durch automatisches Ausführen der Erntearbeit entlang der geradlinigen Vorwärtsroute (S) erzeugt wird.

## Revendications

1. Moissonneuse-batteuse (1) qui génère un site non travaillé (73) d'un champ par moissonnage circulaire dans lequel un corps de véhicule effectue un travail de moissonnage tout en répétant une avance rectiligne et un virage, la moissonneuse-batteuse (1) comprenant :
une unité de positionnement (34) qui acquiert un point de mesure (71) indiquant une position du corps de véhicule ;
une unité de génération de ligne droite (65) qui génère une ligne droite de travail (75) sur la base du point de mesure (71) acquis entre une position de début de travail (P1) et une position de fin de travail (P2) à travers une révolution du travail de moissonnage ; et
**caractérisée en ce qu'**une unité de génération de site non travaillé (66) calcule un point d'intersection (76) des lignes droites de travail (75) se croisant les unes les autres à chaque fois que la ligne droite de travail (75) est générée, et génère le site non travaillé (73) qui forme un polygone avec au moins trois des points d'intersection (76) comme sommets, lorsqu'au moins trois des lignes droites de travail (75) se croisent pour constituer une aire fermée.

2. Moissonneuse-batteuse (1) selon la revendication 1, dans laquelle l'unité de génération de site non travaillé (66)
définit le point d'intersection (76) qui est calculé en dernier comme un point de départ ;
génère un premier polygone (77) si au moins trois des points d'intersection (76) incluant le point de départ sont trouvés en conséquence d'une recherche des points d'intersection (76) dans le sens horaire à partir du point de départ ;
génère un second polygone (78) si au moins trois des points d'intersection (76) incluant le point de départ sont trouvés en conséquence d'une recherche des points d'intersection (76) dans le sens antihoraire à partir du point de départ ; et
si seul l'un du premier polygone (77) et du second polygone (78) est généré, définit celui qui est généré parmi le premier polygone (77) et le second polygone (78) comme le site non travaillé (73), et
si à la fois le premier polygone (77) et le second polygone (78) sont générés, définit celui ayant une plus grande aire parmi le premier polygone (77) et le second polygone (78) comme le site non travaillé (73).

3. Moissonneuse-batteuse (1) selon la revendication 1 ou 2, dans laquelle
l'unité de positionnement (34) acquiert continûment les points de mesure (71) depuis la position de début de travail (P1) jusqu'à la position de fin de travail (P2) à travers une révolution du travail de moissonnage, et
l'unité de génération de ligne droite (65) génère une ligne droite de référence (80) sur la base d'une pluralité des points de mesure (71) acquis, et règle la ligne droite de travail (75) de manière à passer par le point de mesure (71) qui est le plus éloigné du site non travaillé (73) de part et d'autre de la ligne droite de référence (80) et à s'étendre le long de la ligne droite de référence (80).

4. Moissonneuse-batteuse (1) selon l'une quelconque des revendications 1 à 3, dans laquelle lorsqu'une révolution du travail de moissonnage est interrompue et ensuite reprise, l'unité de génération de ligne droite (65) génère une première ligne droite de travail (81) sur la base du point de mesure (71) acquis entre la position de début de travail (P1) et une position d'interruption de travail (P3), et génère une seconde ligne droite de travail (82) sur la base du point de mesure (71) acquis entre la position d'interruption de travail (P3) et la position de fin de travail (P2), et
si un angle d'inclinaison (θ) de la seconde ligne droite de travail (82) par rapport à la première ligne droite de travail (81) est dans une plage prédéterminée, l'unité de génération de ligne droite (65) génère une ligne droite qui connecte la position de début de travail (P1) et la position de fin de travail (P2) en tant que ligne droite de travail (75),
tandis que si l'angle d'inclinaison (θ) de la seconde ligne droite de travail (82) par rapport à la première ligne droite de travail (81) dépasse la plage prédéterminée, l'unité de génération de ligne droite (65) différencie le travail de moissonnage entre une section depuis la position de début de travail (P1) jusqu'à la position d'interruption de travail (P3) et une section depuis la position d'interruption de travail (P3) jusqu'à la position de fin de travail (P2), et définit la première ligne droite de travail (81) et la seconde ligne droite de travail (82) comme lignes droites de travail (75) différentes l'une de l'autre.

5. Moissonneuse-batteuse (1) selon l'une quelconque des revendications 1 à 4, comprenant en outre :
une unité de création de route de déplacement (62) qui génère une route d'avance rectiligne (S) dans le site non travaillé (73) ; et
une unité de commande d'opération automatique (63) qui exécute le travail de moissonnage automatiquement le long de la route d'avance rectiligne (S),
dans laquelle la ligne droite de travail (75) est générée en exécutant le travail de moissonnage automatiquement le long de la route d'avance rectiligne (S).

6. Procédé de calcul de site non travaillé (73) pour générer un site non travaillé (73) d'un champ par moissonnage circulaire dans lequel un corps de véhicule effectue un travail de moissonnage tout en répétant une avance rectiligne et un virage, comprenant :
une étape de génération de ligne droite (S1) consistant à générer une ligne droite de travail (75) sur la base d'un point de mesure (71) indiquant une position du corps de véhicule, qui est acquis entre une position de début de travail (P1) et une position de fin de travail (P2) à travers une révolution du travail de moissonnage ; et
une étape de génération de site non travaillé (S2) consistant à calculer un point d'intersection (76) des lignes droites de travail (75) se croisant les unes les autres à chaque fois que la ligne droite de travail (75) est générée et à générer le site non travaillé (73) qui forme un polygone avec au moins trois des points d'intersection (76) comme sommets, lorsqu'au moins trois des lignes droites de travail (75) se croisent pour constituer une aire fermée,
les étapes du procédé de calcul étant exécutées par au moins un processeur.

7. Procédé de calcul de site non travaillé (73) selon la revendication 6, dans lequel l'étape de génération de site non travaillé (S2) comprend :
le réglage du point d'intersection (76) qui est calculé en dernier comme un point de départ ;
la génération d'un premier polygone (77) si au moins trois des points d'intersection (76) incluant le point de départ sont trouvés en conséquence d'une recherche des points d'intersection (76) dans le sens horaire à partir du point de départ ;
la génération d'un second polygone (78) si au moins trois des points d'intersection (76) incluant le point de départ sont trouvés en conséquence d'une recherche des points d'intersection (76) dans le sens antihoraire à partir du point de départ ; et
si seul l'un du premier polygone (77) et du second polygone (78) est généré, le réglage de celui qui est généré parmi le premier polygone (77) et le second polygone (78) comme le site non travaillé (73),
tandis que si à la fois le premier polygone (77) et le second polygone (78) sont générés, le réglage de celui ayant une plus grande aire parmi le premier polygone (77) et le second polygone (78) comme le site non travaillé (73).

8. Procédé de calcul de site non travaillé (73) selon la revendication 6 ou 7, dans lequel l'étape de génération de ligne droite (S1) comprend : la génération d'une ligne droite de référence (80) sur la base d'une pluralité des points de mesure (71) qui sont continûment acquis depuis la position de début de travail (P1) jusqu'à la position de fin de travail (P2) à travers une révolution du travail de moissonnage, et le réglage de la ligne droite de travail (75) pour passer par le point de mesure (71) qui est le plus éloigné du site non travaillé (73) de part et d'autre de la ligne droite de référence (80) et pour s'étendre le long de la ligne droite de référence (80).

9. Procédé de calcul de site non travaillé (73) selon l'une quelconque des revendications 6 à 8, dans lequel
l'étape de génération de ligne droite (S1) comprend lorsqu'une révolution du travail de moissonnage est interrompue et ensuite reprise, la génération d'une première ligne droite de travail (81) sur la base du point de mesure (71) acquis entre la position de début de travail (P1) et une position d'interruption de travail (P3), et la génération d'une seconde ligne droite de travail (82) sur la base du point de mesure (71) acquis entre la position d'interruption de travail (P3) et la position de fin de travail (P2), et
l'étape de génération de ligne droite (S1) comprend :
si un angle d'inclinaison (θ) de la seconde ligne droite de travail (82) par rapport à la première ligne droite de travail (81) est dans une plage prédéterminée, la génération d'une ligne droite qui connecte la position de début de travail (P1) et la position de fin de travail (P2) en tant que ligne droite de travail (75),
tandis que si l'angle d'inclinaison (θ) de la seconde ligne droite de travail (82) par rapport à la première ligne droite de travail (81) dépasse la plage prédéterminée, la différenciation du travail de moissonnage entre une section depuis la position de début de travail (P1) jusqu'à la position d'interruption de travail (P3) et une section depuis la position d'interruption de travail (P3) jusqu'à la position de fin de travail (P2), et le réglage de la première ligne droite de travail (81) et de la seconde ligne droite de travail (82) comme lignes droites de travail (75) différentes l'une de l'autre.

10. Procédé de calcul de site non travaillé (73) selon l'une quelconque des revendications 6 à 9, comprenant en outre :
une étape de création de route de déplacement (S4) consistant à générer une route d'avance rectiligne (S) dans le site non travaillé (73) ; et
une étape de commande d'opération automatique (S5) consistant à exécuter automatiquement le travail de moissonnage le long de la route d'avance rectiligne (S),
dans laquelle la ligne droite de travail (75) est générée en exécutant automatiquement le travail de moissonnage le long de la route d'avance rectiligne (S).
